Europäisches Patentamt

European Patent Office

Office européen des brevets

(11) Publication number: **0 160 147**
A2

# (12) EUROPEAN PATENT APPLICATION

(21) Application number: **84306945.1**

(22) Date of filing: **11.10.84**

(51) Int. Cl.⁴: **H 02 K 1/06**
H 01 F 27/24, H 01 F 27/26

(30) Priority: **25.04.84 JP 82024/84**

(43) Date of publication of application:
**06.11.85 Bulletin 85/45**

(84) Designated Contracting States:
**DE FR GB IT**

(71) Applicant: **JAPAN SERVO CO. LTD.**
No. 7, Kandamitoshiro-Cho
Chiyoda-Ku Tokyo(JP)

(72) Inventor: **Sakamoto, Masafumi**
No. 358-10, Aioi-Cho 5-Chome
Kiryu-Shi Gunma(JP)

(72) Inventor: **Ishikawa, Hiroyuki**
No. 3531, Azami Iwajiku Kasagakemura
Nitta-Gun Gunma(JP)

(72) Inventor: **Komatsu, Kei**
No. 804, Tanaka-Cho
Ashikaga-Shi Tochigi(JP)

(74) Representative: **Hustwitt, Philip Edward et al,**
Hustwitt & Co., Ludgate House 110 Fleet Street
London, EC4A 2AB(GB)

(54) Laminated iron core for electric machine.

(57) A laminated iron core for an electric machine, wherein a plurality of iron core elements (1–1, 1–2, . . ., 1–n), each of which being provided with half-punched projections (3), (4) of linearly symmetrical portions thereof in such a manner that the half-punched projections (3), (4) protrude in the thickness direction of the core element from front and rear surfaces thereof are divided into two, and one divided iron core elements (1–1, 1–2, . . ., 1–n) are reversed around a line of symmetry thereof and engaged with the other divided iron core elements (1–1, 1–2, . . ., 1–n), so that each of the half-punched projections (3), (4) are fitted into corresponding half-punched recess of the adjacent core element to thereby combine the core elements together.

FIG. 2 (b)

EP 0 160 147 A2

# LAMINATED IRON CORE FOR ELECTRIC MACHINE

This invention relates to a laminated iron core for an electric machine, which is formed by laminating a plurality of iron core elements, each of which being obtained by punching out a thin plate of a magnetic material to a predetermined shape, and fastening them to one another unitarily, and more particularly it relates to a laminated iron core for an electric machine, for example an electric rotary machine such as an electric motor or generator or a stationary electric machine such as a transformer.

Conventional methods of laminating a plurality of iron core elements, each of which being obtained by punching out a thin plate of a magnetic material to a predetermined shape, and fastening them to one another unitarily include (1) a method including a bonding step, (2) a method including a riveting step, and (3) a method including a welding step. A method of fastening a plurality of iron core elements together by providing each of the core elements with a suitable number of half-punched projections which extend through the thickness thereof, fitting these projections into

- 2 -

0160147

the half-punched recesses provided in the corresponding portions of adjacent core elements, and applying pressure to the fitted projections to combine the core elements together, has recently been developed. According to this method, continuously-punched iron core elements can be laminated onto each other in sequence and fastened together immediately, so that this method provides a high productivity and a high fastening accuracy, and is widely used.

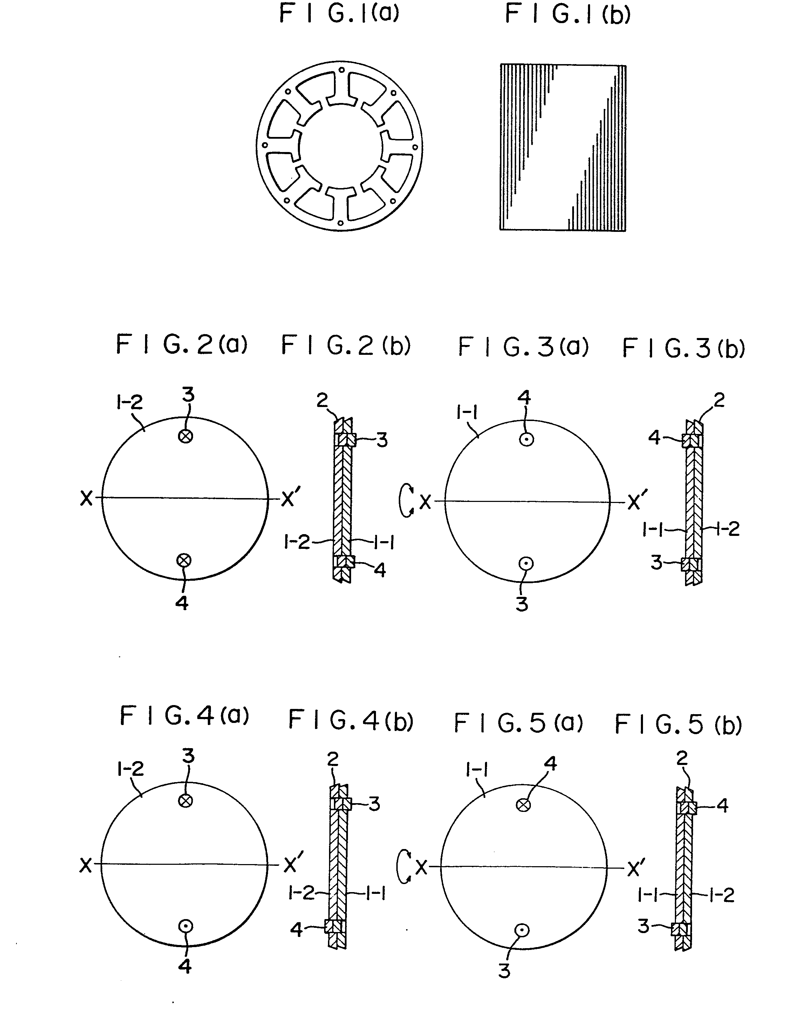

In order to form the laminated iron core shown in Figs. 1a and 1b by this conventional method, for example, two half-punched projections 3, 4 are provided in iron core elements 1-1, 1-2.....1-n which are punched to a predetermined shape shown in Figs. 2a and 2b, in such a manner that the projections 3, 4 protrude in the same direction, and these iron core elements 1-1, 1-2..... 1-n are laminated onto each other in the punching direction so that the half-punched projections and recesses in adjacent core elements engage with each other. The half-punched projections are then driven under pressure into the corresponding half-punched recesses to caulk them and thereby combine the core elements together unitarily.

However, in this method of fastening laminated iron core elements by utilizing half-punched projections provided therein, burrs 2, which occur during the punching, can project from one side surface of each of the laminated iron core elements since the iron core elements are so laminated that all the half-punched projections face in the same predetermined direction, for example the direction in which the core elements were punched  and these burrs can damage insulating paper inserted into a winding groove.

If the outermost iron core element is reversed so that the burrs thereon, which extend in the direction in which the core element was punched, are directed inward with respect to the laminated iron core, to solve this problem, i.e., prevent the burrs 2 from projecting outward from the side surface of the laminated iron core, the outermost iron core element cannot be fastened to the adjacent iron core element for the following reasons. In the conventional method of fastening laminated iron core elements by utilizing half-punched projections provided therein, all the half-punched projections on the laminated core elements protrude in the same direction. Therefore, if the outermost iron core element is reversed, the direction in which the half-punched projections provided thereon protrude and that in which the half-punched projections provided on the adjacent iron core element protrude are opposite to each other, so that the projections or recesses in these two iron core elements face each other.

The iron core elements shown in Figs. 3a and 3b are identical to those of Figs. 2a and 2b, but are turned upside down around the center line X-X'. If the iron core elements shown in Figs. 2a and 2b and those shown in Figs. 3a and 3b are laminated together the half-punched projections provided thereon or the half-punched recesses provided therein face each other, so that these iron core elements cannot be fastened together in this manner.

An object of the present invention is to provide a highly-accurate laminated iron core formed by combining a plurality of core elements together using a novel fastening means which is an improvement on the conventional fastening means based on half-punched projections provided in the core elements, and which is not restricted by the direction in which the core elements are punched.

The laminated iron core for an electric machine according to the present invention is characterized in that it consists of a plurality of iron core elements which are each formed by punching out a thin plate of a magnetic material to a predetermined shape, and which are each provided with half-punched projections in linearly-symmetrical portions thereof in such a manner that the half-punched projections protrude in the thickness direction of each core element from the opposite surface, i.e., from the front and rear surfaces thereof, a certain number of iron core elements among a plurality of these iron core elements being reversed about a line of symmetry so that the direction in which the projections of the reversed core elements were half-punched and that in which the projections of the remaining core elements were half-punched are opposite to each other, the half-punched projections of the core elements being then fitted into the corresponding half-punched recesses and are engaged therewith tightly under pressure, to thereby combine the core elements together.

This and other objects as well as features of the invention will become apparent from the following description of preferred embodiments thereof, taken in conjunction with the accompanying drawings.

Figs. 1a and 1b are front and side elevations of a laminated iron core;

Figs. 2a and 2b are a front elevation and a section through conventional laminated iron core elements;

Figs. 3a and 3b are a front elevation and a section through conventional laminated iron core elements turned upside down;

Figs. 4a and 4b are a front elevation and a section through the laminated iron core elements used in the present invention;

Figs. 5a and 5b are a front elevation and a section through the laminated iron core elements of Figs. 4a and 4b, turned upside down;

Fig. 6a is a section through another embodiment of the laminated iron core according to the present invention;

Figs. 6b and 6c are left and right side elevations of the embodiment of Fig. 6a;

Figs. 7a and 7b are a front view and a section through the laminated iron core elements used in a third embodiment of the present invention;

Fig. 8a and 8b are a front elevation and a section through the laminated iron core elements of Figs. 7a and 7b, turned upside down;

Figs. 9a and 9b are a front elevation and a section through the laminated iron core in the embodiment of Figs. 7a and 7b;

Figs. 10a and 10b are a front view and a rear elevation of the laminated iron core elements used in a fourth embodiment of the present invention; and

Figs. 11a and 11b are a front view and a rear

- 7 -

0160147

elevation of the laminated iron core elements used in a fifth embodiment of the present invention.

Embodiments of the present invention will now be described with reference to the drawings.

According to the present invention, the half-punched projections 3, 4 are provided at symmetrical positions on the iron core elements with respect to the center line X-X', so that the projections 3, 4 protrude in opposite directions as shown in Figs. 4a and 4b. Namely, the projections 3, 4 are so formed that, when, for example, the projection 3 protrudes from the rear surface of the core element, the other projection 4 protrudes from the front surface thereof. The iron core elements 1-1, 1-2.....1-n thus formed are divided into substantially two equal groups, and the core elements in one group are reversed about the axis X-X', as shown in Figs. 5a and 5b, and are laminated onto the core elements of the other group which are directed as shown in Figs. 4a and 4b. When the core elements are laminated together in this manner, the half-punched projections fit into the corresponding recesses, so that the core elements can be combined together unitarily. The direction in which the core elements of one group were punched and that in which the core elements of the other group were punched end up opposite to each other when these two groups of core elements are laminated together, so that the burrs 2 do not project toward a side surfaces of the resultant iron core.

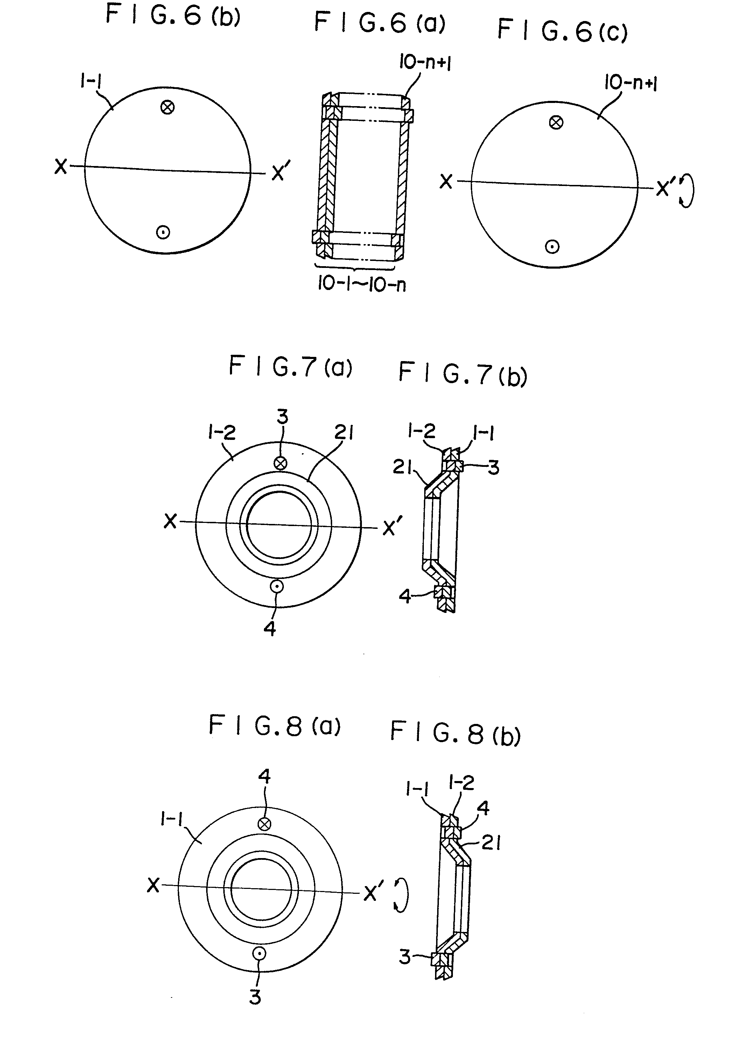

In another embodiment of the present invention, iron core elements 1-1...1-n out of iron core elements 1-1...1-n+1 formed as shown in Figs. 4a and 4b are laminated as shown in Fig. 6a, i.e., in such a manner that the direction in which these core elements is identic, and the final core element, the (1-n+1)th core element is reversed about the axis X-X' and is laminated onto the core elements 1-1...1-n in such a manner that the direction in which the core elements 1-1...1-n were punched and that in which the final core element was punched are opposite. Thus a laminated iron core is formed.

According to this embodiment, the directions in which the front and back  side   iron core elements were punched face inward toward each other, in the same way as in the previous embodiment, so that the burrs 2 do not project outward from the two side surfaces of the laminated iron core. This can prevent damage to the insulating paper inserted in a winding groove due to the burrs.

In a third embodiment of the present invention,

- 9 -

0160147

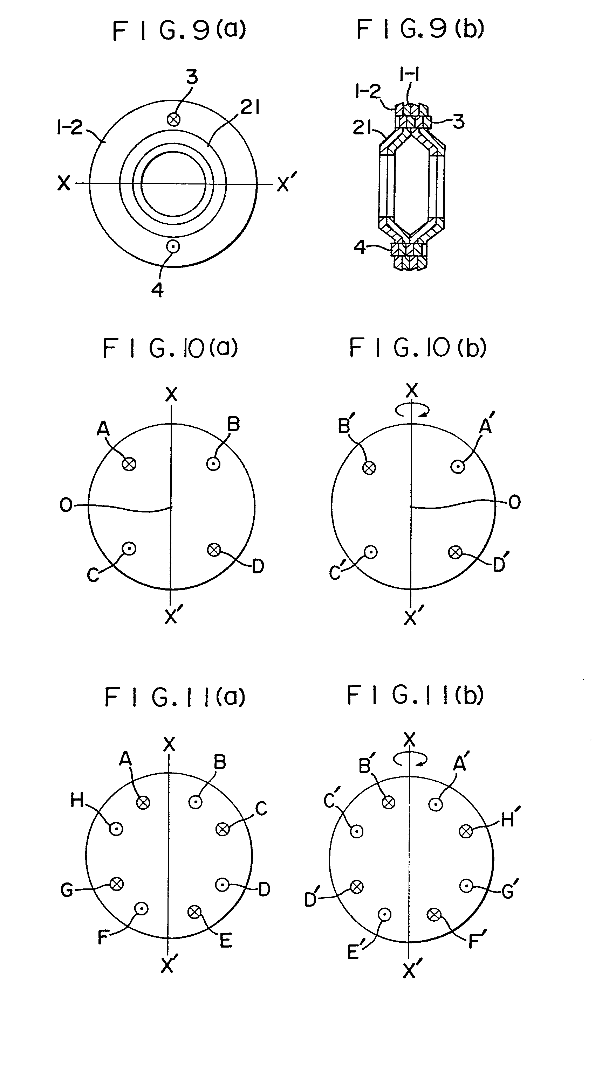

iron core elements, the center of each of which being bent in the thickness direction thereof to form a projecting portion 21, as shown in Figs. 7a and 7b, are used. Two laminated iron core blocks are prepared, each consisting of a suitable number of these iron core elements laminated and combined together unitarily so that the direction in which the core elements were punched is identical. One iron core block is reversed about the axis X-X', as shown in Figs. 8a and 8b. The resultant iron core block and the other iron core block are laminated and fixed to each other unitarily, as shown in Figs. 9a and 9b, i.e., in such a manner that the central projecting portion 21 of each of the core elements in the reversed core block protrudes in the direction shown in Fig. 8b, which is opposite to the direction in which the central projections shown in Fig. 7b protrude, the directions of the half-punched projections 3, 4 in the core elements in these core blocks being opposite, and the directions in which the core elements in these core blocks also being opposite.

In a fourth embodiment of the present invention, at least a pair of half-punched projections can be provided on each iron core element. Namely, as shown in Fig. 10a, half-punched projections A, B, C, D can be provided at symmetrical positions with respect to the center line X-X', so as to be spaced 90° from one another, and extend in opposite directions alternately. Accordingly, even when this iron core element is reversed about the center line X-X', similar half-punched projections protruding in the same directions are at the same positions, as shown in Fig. 10b. When iron core elements, each formed as shown in Figs. 10a and 10b, are laminated and fixed to one another, another laminated iron core according to the present invention can be obtained.

Even when one of the iron core elements used in this embodiment, which has been reversed as shown in Fig. 10b, is rotated through 180° about the center 0, similar half-punched projections protruding in the same directions are at the same positions, with the alternate opposite-protrusion condition thereof unchanged. Therefore, an iron core element thus reversed and rotated can also be laminated and fixed to another. Accordingly adjacent iron core elements can be laminated after they have been rotated through 180° relative to one another about the center 0, to lessen errors in the shape of the resultant iron core.

As shown in Figs. 11a and 11b, half-punched projections may also be provided so as to be spaced 45° from one another, and extend in opposite directions alternately. The effect of the iron core element with these half-punched projections is substantially the same as that of
the iron core element of Fig. 10a and 10b. The iron
core elements of the construction shown in Figs. 11a and
11b can be laminated together after each has been rotated
circumferentially through 90° relative to the adjacent
iron core elements.

The present invention described above has the
following effects.

(1)  The outermost iron core elements in a laminated iron
core can be arranged so that the directions in which
these core elements were punched face into the iron core.
Accordingly any burrs produced during the punching of the
core elements do not project from the end surfaces of the
iron core, so that damage to the insulating paper is prevented.
Such a laminated iron core can be manufactured to a
high accuracy and with a high efficiency, simply by using
fastening means consisting of half-punched projections.

(2)  One group of laminated axially-bent, non-symmetrically
constructed iron core elements are reversed and fastened
to another group of similar, non-reversed iron core
elements. This enables the manufacture of an axially
symmetrical laminated iron core to a high accuracy and
with a high efficiency.

(3)  The iron core elements can be laminated together one by
one with sequential 90 degrees rotation in one direction
against preceding element as mentioned above, so that errors in the shape of an iron core, i.e., errors in the arrangement of magnetic poles thereof, can be reduced. This also ensures that the laminated iron core can be manufactured with a high efficiency.

- 13 -

0160147

Claims:

1. A laminated iron core for an electric machine, comprising a plurality of iron core elements (1-1, 1-2, ..., 1-n), each of which being formed by punching out a thin plate of a magnetic material to a predetermined shape and each of which being provided with half-punched projections (3), (4) of linearly symmetrical portions thereof in such a manner that said half-punched projections (3), (4) protrude in the thickness direction of said core element from opposite surfaces thereof, i.e., from front and rear surfaces thereof; a certain number of said iron core elements (1-1, 1-2, ..., 1-n) among a plurality of said iron core elements (1-1, 1-2, ..., 1-n) being reversed around a line of symmetry thereof so that the directions in which said half-punched projections (3), (4) of said reversed core elements were half-punched and in which said half-punched projections (3), (4) of the remaining, non-reversed, core elements were half-punched are opposite to each other; each of said half-punched projections (3), (4) being then fitted into the corresponding half-punched recess of the adjacent core element and is engaged therewith tightly under pressure, to thereby combine said core elements together.

2. The laminated iron core for an electric machine according to Claim 1, wherein the directions in which the two outermost iron core elements $(1-1,\ 1-2,\ ...,1-n)$ of said laminated iron core were punched are opposite to each other.

3. The laminated iron core for an electric machine according to Claim 1, wherein the central portion of each of said iron core is bent in the thickness direction thereof.

F I G. l(a)     F I G. l(b)

F I G. 2 (a)   F I G. 2 (b)   F I G. 3 (a)   F I G. 3 (b)

F I G. 4 (a)   F I G. 4 (b)   F I G. 5 (a)   F I G. 5 (b)

FIG. 6 (b)

FIG. 6 (a)

FIG. 6 (c)

FIG. 7 (a)

FIG. 7 (b)

FIG. 8 (a)

FIG. 8 (b)

F I G. 9 (a)

F I G. 9 (b)

F I G. 10 (a)

F I G. 10 (b)

F I G. 11 (a)

F I G. 11 (b)